# EUROPEAN PATENT SPECIFICATION

(11) **EP 0 407 937 B1**
(45) Date of publication and mention of the grant of the patent: **12.10.1994**
(21) Application number: 90113078.1
(22) Date of filing: 09.07.1990
(51) Int. Cl.: C08F 214/22, C08F 214/26, C08F 2/38

(54) **Fluoroelastomers with improved processability and process for preparing them**
Fluorelastomere mit verbesserter Verarbeitbarkeit und Verfahren zu ihrer Herstellung
Elastomères fluorées ayant une transformabilité améliorée et leur procédé de préparation

(30) Priority: 10.07.1989 IT 4100489
(43) Date of publication of application: 16.01.1991
(73) Proprietor: AUSIMONT S.p.A., I-20100 Milano (IT)
(72) Inventor: Albano, Margherita, I-20100 Milan (IT); Brinati, Giulio, I-20100 Milan (IT); Arcella, Vincenzo, I-28100 Novara (IT); Giannetti, Enzo, I-28100 Novara (IT)
(74) Representative: Barz, Peter, Dr.

(56) References cited:
- EP-A- 0 055 407
- EP-A- 0 211 251
- EP-A- 0 398 241

## Description

The present invention relates to elastomeric fluorinated polymers endowed with improved processability as well as to a process for preparing them.

As it is known, elastomeric fluorinated copolymers, in particular those based on vinylidene fluoride (VDF), hexafluoropropene (HFP) and on other monomers such as tetrafluoroethylene (TFE) and fluorinated vinylethers (FVE), have a broad field of application, owing to their properties in the vulcanized state such as stability to heat, to atmospheric and chemical agents in general, and to sunlight. Said polymers are predominantly prepared by copolymerisation of the above fluorinated monomers, in suitable ratios, in the presence of radical starters of the peroxide type, activated thermally or by means of redox systems.

A requirement of the industry which prepares and uses fluoroelastomeric polymers is that said products should be promptly and economically vulcanizable. In particular required are: high vulcanization rates, a significant increase in the torque value during the ODR vulcanization test, easy release of the vulcanized products from the moulds, low compression set values of the vulcanizates and, finally, sufficiently low viscosity values of the vulcanization mixtures to permit an easy use of said mixtures, mainly in injection moulding.

Several attempts have been made to obtain fluoroelastomers which are satisfactory in said respects. US-A-4 035 565 describes fluorinated copolymers which comprise up to 3% by moles of units derived from bromotrifluoroethylene or 4-bromo-3,3,4,4-tetrafluorobutene-1 and are based on monomeric units derived from combinations of tetrafluoroethylene and C₂-C₄ olefins and, optionally, vinylidene fluoride, or from combinations of tetrafluoroethylene and perfluoroalkyl-perfluorovinylethers, or of perfluoroalkylperfluorovinylethers and fluorinated olefins.

Said copolymers exhibit excellent thermal stability but can be processed only with difficulty, due to the adhesion and to the residues that they leave on the surfaces of the vulcanization moulds.

EP-A-211 251 describes a process for the preparation of curable fluoroelastomers comprising reacting, as mandatory monomers, vinylidene fluoride, hexafluoropropene and a brominated fluorovinyl ether of general formula CF₂Br-(R_{f})ₙ-O-CF=CF₂ wherein R_{f} is a fluorinated alkylene radical in the presence of a chain transfer agent of general formula R-(CF₂Br)ₘ wherein m is 1 or 2 and R can be either bromine or a perfluoroalkyl radical containing a bromine atom bonded to a secondary carbon atom (for m = 1) or an alkylene radical containing a bromine atom bonded to a secondary carbon atom (for m = 2).

EP-A-398 241, a document relevant under Art. 54(3) and (4) EPC, discloses a peroxide curable fluoroelastomer, prepared by emulsion polymerization in the presence of iodinated compounds of formula RIₙ where R is a hydrocarbon radical and n is 1 or 2, said iodine being bonded at a substantial number of terminal positions on the fluoroelastomer. Said fluoroelastomer contains (a) repeat units derived from fluoroolefins and fluorovinylethers, said units containing bromine and being present in an amount to provide 0.1 to 1.0 weight percent of bromine in the fluoroelastomer, and (b) repeat units of vinylidene fluoride and of one or more fluoroolefins copolymerizable therewith; or (c) repeat units of tetrafluoroethylene, perfluoroalkyl-vinylethers and ethylene in certain amounts.

FR-A-2 386 561 discloses readily vulcanizable fluorinated copolymers, consisting of monomeric units derived from vinylidene fluoride and, optinally, of one or more fluoroolefins, comprising at least one iodine atom per polymeric chain, said iodine atom being situated at the end of the chain and being derived from iodinated chain transfer agents (RI)ₓ and, furthermore, comprising within the polymeric chain, fluorohydrocarbon residues R derived from the above chain transfer agents.

Said copolymers are prepared by (co)polymerization of suitable fluorinated monomers, in the presence of the above iodinated transfer agents and a source of free radicals, such as light irradiation, peroxides, etc.

The products thus obtained are promptly vulcanizable and do not exhibit adhesion to the moulds during vulcanization. They show, however, a low thermal stability.

Thus, one of the objects of the present invention is to provide readily vulcanizable elastomeric fluorinated copolymers, endowed with improved processability (especially in injection moulding), which do not cause adhesion to the moulds during moulding processes, both in a press and by injection, and which, at the same time, possess a satisfactory thermal stability.

The fluoroelastomeric copolymers according to the present invention comprise monomeric units derived from vinylidene fluoride and/or tetrafluoroethylene, said units being optionally combined with monomeric units derived from hexafluoropropene and/or perfluoroalkyl-perfluorovinylethers, and contain, in an end position of the polymeric chain, a halogen atom selected from iodine and bromine or mixtures thereof, in an amount equal to or less than one halogen atom per polymeric chain, and are further characterized by a content of non-terminal bromine atoms, deriving from brominated monomeric units in the polymeric chain, ranging from 0.05 to 2% by weight, based on the total weight of the monomeric units present in the chain. Said copolymers are obtainable, according to the present invention, by polymerizing the corresponding monomers in the presence of one or more compounds capable of providing, under polymerization conditions, Br⁻ and/or I⁻ ions in the polymerization medium specified in more detail below.

Monomeric units derived from ethylene and/or propylene and/or butene-1 and/or isobutene, can be present in such copolymers in amounts up to 40% by moles, based on the total moles of the fluorinated monomeric units.

The content of bromine and/or iodine located at the ends of the polymeric chains generally ranges from 0.001 to 1% by weight, but preferably from 0.04 to 0.6% by weight, based on the total weight of the monomeric units which are present in the polymer.

Preferably, iodine is the halogen which is present in the end positions of the polymeric chains.

Examples of brominated monomeric units present in the copolymers that can be mentioned are those which are derived from polymerizable brominated compounds such as the compounds of general formula Br-CF₂-Rf-O-CF=CF₂, where Rf is a perfluorinated alkylene group containing from 1 to 9 carbon atoms, or derived from brominated olefins such as bromotrifluoroethylene, 4-bromo-3,3,4,4-tetrafluorobutene-1 and, in general, olefins wherein at least one hydrogen atom has been substituted by a bromine atom and, optionally, one or more of the remaining hydrogen atoms have been substituted by another halogen atom, preferably fluorine. Some olefins of this type are preparable according to methods known in the art, for example, as described by Tarrant and Tunden in J. Org. Chem. 34, 864 (1969) and by Fainberg and Miller in JACS 79, 4170 (1957). Other brominated olefins which may be copolymerized and, thus, can form brominated monomeric units contained in the products of the present invention are vinyl bromide, 1-bromo-2,2-difluoroethylene, perfluoroallylbromide, 4-bromo-1,1,2-trifluorobutene, 4-bromo-1,1,3,3,4,4-hexafluorobutene, 4-bromo-3-chloro-1,1,3,4,4-pentafluorobutene, 6-bromo-5,5,6,6-tetrafluorohexene, 4-bromo-perfluorobutene-1 and 3,3-difluoroallylbromide.

Among the monomeric perfluoroalkyl-perfluorovinylether units the preferred ones are those which are derived from compounds of general formula CF₂=CF-O-Rf, wherein Rf is a perfluoroalkyl radical containing from 1 to 5 carbon atoms and, preferably, from 1 to 3 carbon atoms (for example, CF₃ or C₂F₅).

The fluoroelastomeric copolymers of the present invention result - the qualitative and quantitative composition being identical - in vulcanization mixtures endowed with improved processability in the molten state as compared with the corresponding bromine-modified copolymers of US-A-4 035 565, exhibit a detachability from the vulcanization moulds which is at least equal to that of the polymers modified with terminal iodine as described in FR-A-2 386 561, and, at the same time, possess a higher thermal stability than that of the products of said FR-A.

Furthermore, the fluoroelastomeric compounds according to the present invention are substantially free of gels (gel content lower than 1% by weight).

Additionally, said copolymers generally exhibit modulus values, after vulcanization under standard conditions and with identical vulcanization formulation, which are higher than those of the only chain-brominated copolymers or of the only iodinated copolymers with more than one terminal iodine atom.

Another object of the present invention is to provide a process for preparing the above elastomeric fluorinated copolymers, which process comprises polymerizing, preferably in an aqueous emulsion, a mixture of monomers comprising (a) vinylidene fluoride and/or tetrafluoroethylene and, optionally, hexafluoropropene and/or perfluoroalkyl-perfluorovinylethers and (b) at least one brominated polymerizable monomer by means of radical starters and in the presence of one or more compounds capable of providing, under polymerization conditions, I⁻ and/or Br⁻ ions in the polymerization medium and being selected from hydroiodic (HI) and hydrobromic (HBr) acids, iodides and bromides of metals belonging to groups I and II, A and B, of the Periodic System such as, for example, Li, Na, K, Rb, Cs, Be, Mg, Ca, Sr, Ba, Cu, Ag, Zn and Cd, as well as of the transition metals such as, for example, Fe, Co, Ni, Ru, Rh, Pd and Pt, or belonging to groups III and IV A of the Periodic System such as, for example, Al, Ga, Sn and Pb. The brominated monomers (b) are employed in an amount such as to provide a polymer containing, within the polymeric chain, from 0.05 to 2% by weight of bromine, based on the total weight of the monomeric units present in the polymer.

Preferably, the iodides of the alkali or alkaline-earth metals are used. The molar amount of the above compounds containing Br or I to be used in the process of the invention is, preferably, higher than the molar amount of iodine and/or bromine combined in the end positions of the chains of the final polymer.

In practice, the amount of such compounds is usually higher by 30% by weight than the amount corresponding to the amount of terminal iodine and/or bromine present in the final polymer.

In addition to the above fluorinated monomers and polymerizable brominated monomers, olefinic monomers, in particular ethylene and/or propylene and/or butene-1 and/or isobutene, can be present in the polymerization mixture.

The above olefinic monomers can be employed in amounts up to 40% by moles with respect to the total moles of fluorinated monomers present in the polymerization mixture.

The process according to the present invention permits the preparation of fluoroelastomers containing, in the end positions of the polymeric chains, iodine and/or bromine atoms in an (average) amount not exceeding one atom per polymeric chain and, preferably, in an amount ranging from 0.1 to 0.9 atoms per polymeric chain.

In said fluoroelastomers the remaining ends of the polymeric chains can exhibit an end group stemming from the decomposition of the polymerization starter or from a possible reaction thereof with the polymerization medium. For example, when a persulphate is utilized as a polymerization starter, said end groups may be -OH or -COOH groups.

Alternatively, the other end groups can be derived from a suitable and known chain transfer agent introduced into the reaction medium in order to regulate the molecular weight of the polymer such as, for example, ethyl acetate, chloroform, etc.

The copolymerization reaction can be carried out by means of known methods such as, for example, those described in Kirk Othmer, Encyclopaedia of Chemical Technology, Vol. 8, pages 500 and following, 1979. Said polymerization methods comprise bulk polymerization or polymerization in solution of organic solvents, or in emulsion or suspension in water. Useful radical polymerization starters are, for example, inorganic peroxides such as ammonium or potassium persulphates, redox systems such as persulphate-bisulphite and ferropersulphate, organic peroxides such as benzoyl peroxide, dicumyl peroxide, bis(4-t.butyl-cyclohexyl)peroxodicarbonate, di-t.butyl-peroxide, diisopropylperoxodicarbonate; diethylhexylperoxodicarbonate, acetyl-cyclohexyl-sulphonyl peroxide, t.butyl-peroxopivalate, 2,4-dichloro-benzoyl peroxide, isobutyl peroxide, octanoyl peroxide, fluorinated peroxides and peranhydrides.

Preferably, the polymerization is conducted in aqueous emulsion. Any type of (fluorinated) emulsifier can be used in the process of the present invention; examples thereof are the fluorinated carboxylic acid soaps.

The polymerization reaction can be conducted at temperatures ranging from 25° to 150°, under pressures up to 10 MPa.

Merely as examples of elastomeric fluorinated copolymers of the present invention may be mentioned those consisting of a combination of the following monomeric units, in the mole percentage indicated below:

| | | |
|---|---|---|
| I) | Vinylidene fluoride (VDF) | 35-80 |
| | Hexafluoropropene (HFP) | 10-35 |
| | Tetrafluoroethylene (TFE) | 0-30 |
| | Perfluoroalkylvinylether (FVE) (where the alkyl group can have 1 to 3 carbon atoms) | 0-25 |
| II) | VDF | 35-80 |
| | FVE | 10-35 |
| | TFE | 0-30 |
| III) | TFE | 53-80 |
| | FVE | 20-47 |
| IV) | TFE | 30-65 |
| | Hydrogenated (i.e., non-fluorinated) olefin containing from 2 to 4 carbon atoms | 20-55 |
| | VDF | 0-40 |

The following examples serve to illustrate the invention without limiting the scope thereof.

### EXAMPLES

### Polymerization method and characterization of the copolymers

Use was made of an evacuated 5-liter reactor equipped with stirrer. The reactor was charged with 3,500 g of H₂O, optionally an ionic surfactant (such as ammonium perfluorooctanoate), and acidity buffer consisting of potassium metabisulphite in an amount such as to always maintain the pH value in the range of from 2 to 6 and, finally, all or part of the predetermined amount of the compound(s) capable of providing I⁻ and/or Br⁻ ions.

Pressure was generated in the reactor by introducing the monomer mixture and then, after having brought the reactor temperature to the polymerization temperature, the radical starter, an aqueous solution of (NH₄)₂S₂O₈ (150 g of persulphate/liter of H₂O), was added.

During the polymerization, starter and/or iodine and/or bromine ion generator compound were optionally added and the pressure was maintained constant by feeding the monomers in the indicated molar ratios.

Upon completion of the reaction, corresponding to the desired conversion, the emulsion was discharged and coagulated by means of conventional methods, for example, by addition of Al₂(SO₄)₃ or of acids. The polymer was separated, washed with water and dried in an air-circulation oven until the polymer showed a moisture content of less than 1%.

The polymer thus obtained was mixed in an open roller mixer with conventional vulcanization ingredients, in the weight percentages indicated below:

| | |
|---|---|
| Polymer | 100 |
| Luperco^{(R)}101 XL | 3 |
| Triallylisocyanurate | 4 |
| PbO | 3 |
| Carbon black (MT Black) | 30 |

The mixture was subjected to the following measurements:
a) Mooney viscosity 1+10 at 121°C (ASTM 1646/82).
b) Mooney viscosity, scorch at 135°C (ASTM 1646/82)
c) ODR (oscillating disk rheometer) (ASTM D 2084/81) conducted at 180°C, arc ± 3.

The mixture was then vulcanized in a press at 170°C for 10 minutes, according to ASTM D 412/80.

The vulcanizate was subjected to the following measurements:
d) Measurement of the following mechanical properties:
   - Tensile modulus (M100)
   - Tensile strength (T.S.)
   - Elongation at break (E.B.)
   - Shore hardness A (Hard.);
e) Measurement of the above mechanical properties after post-treatment of the vulcanizate at 250°C by raising up to 8 hours and permanently for 24 hours at 250°C (ASTM D 412/80);
f) Detachability from the mould according to the procedure indicated below:
   The mixture was vulcanized in a press at 170°C for 10 minutes and, thereafter, the test piece was removed from the mould at 170°C.
   The mould soiling was evaluated on a mould having 7 circular cavities (diameter = 40 mm, height = 3 mm) by repeating the moulding operations for all tested mixtures until differences on the bottom surfaces of the circular cavities (brown spots, i.e., darker opalescences) could be observed.
   For each mixture, 80 moulding cycles were carried out. The evaluation scale was as follows:
   - 10.: No brown spots present after 80 moulding cycles.
   - 9.: Brown spots present after 70 moulding cycles.
   - 8.: Brown spots present after 62 moulding cycles.
   - 7.: Brown spots present after 55 moulding cycles.
   - 6.: Brown spots present after 49 moulding cycles.
   - 5.: Brown spots present after 42 moulding cycles.
   - 4.: Brown spots present after 35 moulding cycles.
   - 3.: Brown spots present after 28 moulding cycles.
   - 2.: Brown spots present after 21 moulding cycles.
   - 1.: Brown spots present after 14 moulding cycles.
   - 0.: Brown spots present after 7 moulding cycles.
g) Thermal stability on the vulcanized test pieces, post-treated at 275°C for 70 hours (ASTM D 573/81 (E145)).
h) Compression set at 200°C for 70 hours after post-treatment at 250°C by raising up to 8 hours and permanently for 24 hours (ASTM D 1414/78).

### Example 1

Molar composition of the fed monomer mixture (percent):

| | |
|---|---|
| - HFP | 25 |
| - TFE | 25 |
| - VDF | 50 |

Other reagents:

| | |
|---|---|
| - KI | 4.2 g |
| - Starter (NH₄)₂S₂O₈ | 6.9 g |

During polymerization, which lasted 129 minutes, the reactor was charged with 0.78 g of starter in intervals of 10 minutes and with KI in increments of 0.42 g after each 10% conversion of the monomers, as well as with CF₂=CF-O-CF₂-CF₂-Br, in increments of 1.7 g after each 5% conversion of the monomers.

Polymerization temperature and pressure were 85°C and 1.7 MPa, respectively.

1500 g of a polymer having the following composition (determined by ¹⁹F-NMR) were obtained (in mole percent):

| | |
|---|---|
| - HFP | 21.4 |
| - VDF | 53.8 |
| - TFE | 23.9 |

the balance to 100 consisting of brominated monomeric units, and containing 0.69% by weight of bromine (determined by fluorerscence) based on the polymer weight. The polymer had an inherent viscosity of 0.42 dl/g.

This copolymer exhibited iodine atoms only in one of the end positions of the polymeric chains, in an amount of 0.47 atoms per polymeric chain, and corresponding to 0.14% by weight of iodine, based on the polymer. The copolymer was substantially gel-free. The above characteristics (a) to (h) of the vulcanization mixture and of the resulting vulcanizate are given in the table below.

### Example 2 (Comparison)

The procedure of example 1 was repeated but without employing the brominated monomer and, furthermore, by using 5.4 g of KI. In the copolymer, the content of terminal iodine was 0.18% by weight, corresponding to 0.52 iodine atoms per polymeric chain. There was no gel content. The characteristics of the vulcanization mixture and of the corresponding vulcanizate are reported in the table below.

### Example 3

Composition of the fluorinated monomers employed (in mole percent):

| | |
|---|---|
| - VDF | 55 |
| - Perfluoromethyl-vinylether (PMVE) | 23 |
| - TFE | 22 |

The other polymerization conditions were similar to those of example 1, with the exception of the pressure, which was 1.9 MPa, and the total amount of KI, which was 3.6 g and was fed in 0.36 g increments after each 10% conversion of the monomer. The resulting polymer had the following composition (in mole percent):

| | |
|---|---|
| - VDF | 58.6 |
| - PMVE | 17.8 |
| - TFE | 23.6 |

with a bromine content in the polymeric chain of 0.6% by weight and a terminal iodine content of 0.11% by weight, corresponding to 0.65 iodine atoms per polymeric chain. The gel content was 0%.

The characteristics of the vulcanization mixture and of the corresponding vulcanizate are reported in the table below.

### Example 4

Example 3 was repeated, using the following fluorinated monomers (in mole percent):

| | |
|---|---|
| - VDF | 46 |
| - HFP | 5 |
| - TFE | 26 |
| - PMVE | 23 |

The resulting polymer had the following composition (in mole percent):

| | |
|---|---|
| - VDF | 48.4 |
| - HFP | 4.5 |
| - TFE | 27.4 |
| - PMVE | 19.1 |

with a bromine content in the chain of 0.6% by weight and an iodine content in end position of 0.1% by weight, corresponding to 0.6 iodine atoms per polymeric chain. The inherent viscosity was 0.54 dl/g. The gel content was 0%. The characteristics of the mixture and the resulting vulcanizate are reported in the table below.

### Example 5

Example 1 was repeated, with the exception that the pressure was 2.2 MPa and the amount of the starter was 2.8 g at the beginning and KI was added in 0.31 g portions per each 10% conversion of the monomers, using the following fluorinated monomers (in mole percent):

| | |
|---|---|
| - VDF | 79 |
| - HFP | 21 |

The polymer obtained exhibited the following compositiion (in mole percent):

| | |
|---|---|
| - VDF | 78.1 |
| - HFP | 21.7 |

with a bromine content in the chain of 0.6% by weight, and a content of iodine in end position of 0.12% by weight, corresponding to 0.65 iodine atoms per chain. The inherent viscosity was 0.7 dl/g. The gel content was 0%. The characteristics of the vulcanization mixture and of the corresponding vulcanizate are reported in the table below.

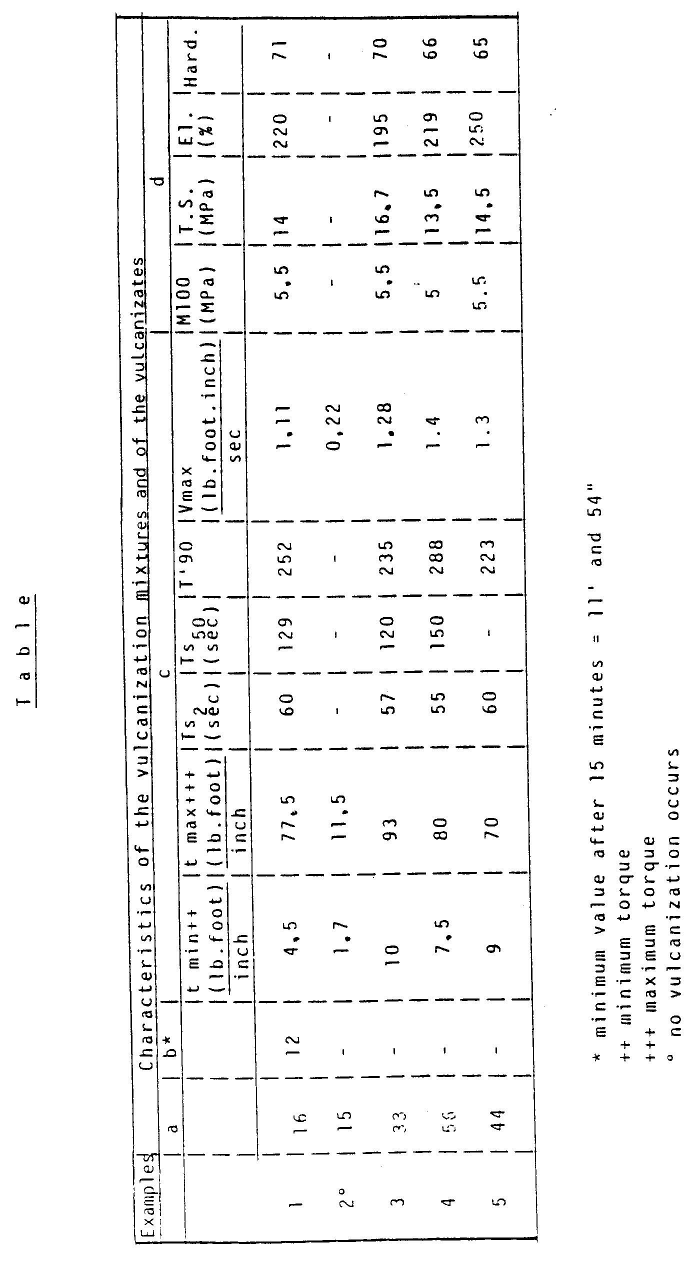

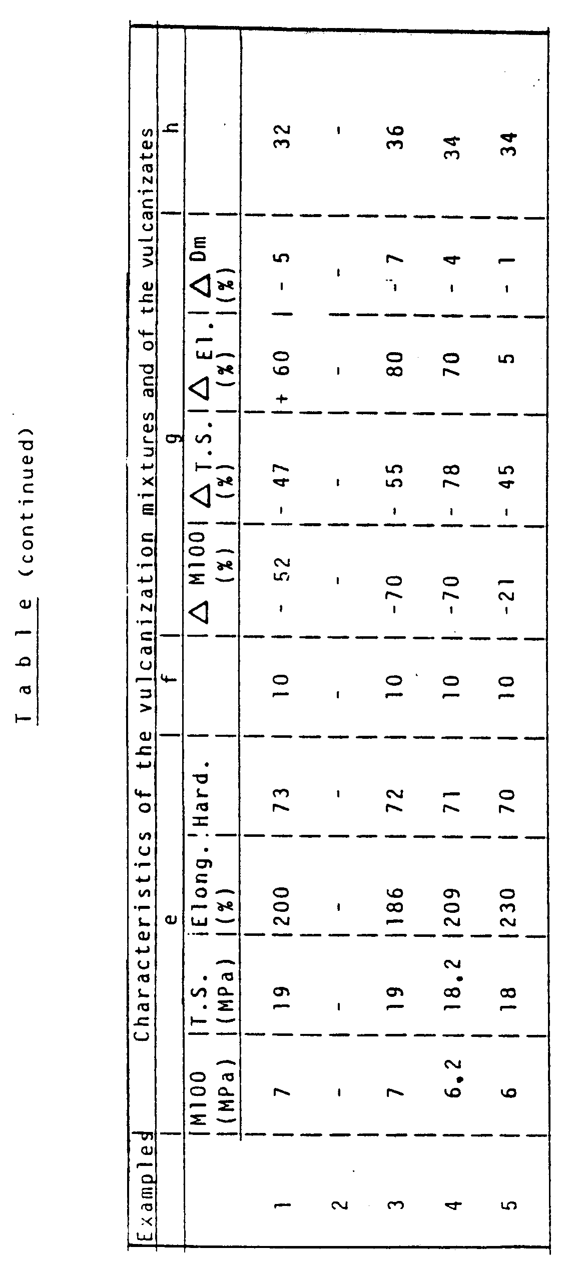

## Claims

1. Elastomeric fluorinated copolymers comprising monomeric units derived from vinylidene fluoride and/or tetrafluoroethylene, optionally combined with monomeric units derived from hexafluoropropene and/or perfluoroalkyl-perfluorovinylethers, which contain terminal iodine and/ or bromine atoms in an amount of, at the most, one iodine and/or bromine atom per polymeric chain and which contain bromine within the chain, derived from brominated units of the polymeric chain, in an amount of from 0.05 to 2% by weight, based on the total weight of the monomeric units present in the polymer, said copolymers being obtainable by polymerizing the corresponding monomers in the presence of one or more compounds capable of providing, under polymerization conditions, I⁻ and/or Br⁻ ions in the polymerization medium and being selected from hydroiodic (HI) and hydrobromic (HBr) acids, iodides and bromides of metals belonging to groups I and II, A and B, groups III and IV A of the periodic system and of the transition metals.

2. Copolymers according to claim 1, wherein the terminal iodine and/or bromine atoms of the polymeric chains represent from 0.001 to 1% by weight of the total weight of the monomeric units present therein.

3. Copolymers according to any one of claims 1 and 2, wherein the content of terminal iodine and/or bromine atoms is from 0.04 to 0.6% by weight of the total weight of the monomeric units present therein.

4. Copolymers according to any one of claims 1 to 3, comprising up to 40% by moles, based on the total moles of fluorinated monomeric units, of units derived from an olefin selected from ethylene, propylene, butene, isobutene or mixtures thereof.

5. Process for preparing elastomeric fluorinated copolymers according to claim 1, wherein a mixture of monomers comprising (a) vinylidene fluoride and/or tetrafluoroethylene and, optionally, hexafluoropropene and/or perfluoroalkyl-perfluorovinylethers and (b) at least one polymerizable brominated monomer is polymerized by means of radical starters and in the presence of one or more compounds capable of providing, under polymerization conditions, I⁻ and/or Br⁻ ions in the polymerization medium and being selected from hydroiodic (HI) and hydrobromic (HBr) acids, iodides and bromides or metals belonging to groups I and II, A and B, groups III and IV A of the periodic system and of the transition metals, said brominated monomer(s) being employed in an amout such as to provide a polymer containing, within the polymeric chain, from 0.05 to 2% by weight of bromine, based on the total weight of the monomeric units present in the polymer.

6. Process according to claim 5, which is carried out in aqueous emulsion.

7. Process according to any one of claims 5 and 6, wherein the mixture of monomers comprises up to 40% by moles, based on the total moles of fluorinated monomers present therein, of an olefin selected from ethylene, propylene, butene-1, isobutene and mixtures thereof.

8. Process according to any one of claims 5 to 7, wherein iodides or bromides of alkali or alkaline-earth metals are used.

9. Process according to any one of claims 5 to 8, wherein iodides of alkali metals and/or of alkaline-earth metals are employed.

## Patentansprüche

1. Elastomere fluorierte Copolymere, umfassend monomere Einheiten, die von Vinylidenfluorid und/oder Tetrafluorethylen abgeleitet sind, gegebenenfalls kombiniert mit monomeren Einheiten, die von Hexafluorpropen und/oder Perfluoralkylperfluorvinylethern abgeleitet sind, welche endständige Iod- und/oder Bromatome in einer Menge von höchstens einem Iod- und/oder Brom-Atom pro Polymerkette enthalten und welche Brom innerhalb der Kette, abgeleitet von bromierten Einheiten der Polymerkette, in einer Menge von 0,05 bis 2 Gewichts-%, bezogen auf das Gesamtgewicht der in dem Polymeren anwesenden monomeren Einheiten, enthalten, wobei diese Copolymeren erhältlich sind durch Polymerisation der entsprechenden Monomeren in Anwesenheit von einer oder mehreren Verbindungen, die unter den Polymerisationsbedingungen im Polymerisationsmedium I⁻- und/oder Br⁻-Ionen zur Verfügung stellen können und ausgewählt sind aus Iodwasserstoffsäure (HI) und Bromwasserstoffsäure (HBr), Iodiden und Bromiden von Metallen, die zu den Gruppen I und II, A und B, den Gruppen III und IV A des Periodensystems gehören, und von Übergangsmetallen.

2. Copolymere nach Anspruch 1, in welchen die endständigen Iod- und/oder Brom-Atome der Polymerketten 0,001 bis 1 Gewichts-% des Gesamtgewichts der darin enthaltenen monomeren Einheiten darstellen.

3. Copolymere nach irgendeinem der Ansprüche 1 und 2, in welchen der Gehalt an endständigen Iod- und/oder Brom-Atomen 0,04 bis 0,6 Gewichts-% des Gesamtgewichts der darin enthaltenen monomeren Einheiten beträgt.

4. Copolymere nach irgendeinem der Ansprüche 1 bis 3, umfassend bis zu 40 Mol-%, bezogen auf die Gesamtmol der fluorierten monomeren Einheiten, von Einheiten, die von einem aus Ethylen, Propylen, Buten, Isobuten oder Mischungen davon ausgewählten Olefin abgeleitet sind.

5. Verfahren zur Herstellung elastomerer fluorierter Copolymerer nach Anspruch 1, bei welchem eine Mischung von Monomeren, die (a) Vinylidenfluorid und/oder Tetrafluorethylen und gegebenenfalls Hexafluorpropen und/oder Perfluoralkylperfluorvinylether und (b) mindestens ein polymerisierbares brominiertes Monomer umfaßt, mit Hilfe von radikalischen Startern und in Anwesenheit von einer oder mehreren Verbindungen, die unter den Polymerisationsbedingungen im Polymerisationsmedium I⁻- und/oder Br⁻-Ionen zur Verfügung stellen können und ausgewählt sind aus Iodwasserstoffsäure (HI) und Bromwasserstoffsäure (HBr), Iodiden und Bromiden von Metallen, die zu den Gruppen I und II, A und B, den Gruppen III und IV A des Periodensystems gehören, und von Übergangsmetallen, polymerisiert wird, wobei das bzw. die bromierte(n) Monomere(n) in einer solchen Menge eingesetzt wird (werden), daß ein Polymer resultiert, das innerhalb der Polymerkette 0,05 bis 2 Gewichts-% Brom, bezogen auf das Gesamtgewicht der in dem Polymer vorhandenen monomeren Einheiten, enthält.

6. Verfahren nach Anspruch 5, das in wäßriger Emulsion durchgeführt wird.

7. Verfahren nach irgendeinem der Ansprüche 5 und 6, bei welchem die Mischung von Monomeren bis zu 40 Mol-%, bezogen auf die Gesamtmol von fluorierten Monomeren, die darin enthalten sind, eines aus Ethylen, Propylen, Buten-1, Isobuten und Mischungen davon ausgewählten Olefins umfaßt.

8. Verfahren nach irgendeinem der Ansprüche 5 bis 7, bei welchem die Iodide oder Bromide von Alkali- oder Erdalkalimetallen verwendet werden.

9. Verfahren nach irgendeinem der Ansprüche 5 bis 8, bei welchem die Iodide von Alkalimetallen und/oder Erdalkalimetallen verwendet werden.

## Revendications

1. Copolymères fluorés élastomères, comprenant des unités monomères provenant du fluorure de vinylidène et/ou du tétrafluoroéthylène, facultativement combinées avec des unités monomères provenant de l'hexafluoropropène et/ou de perfluoroalkyl-perfluorovinyléthers, qui contiennent des atomes d'iode et/ou de brome terminaux dans une quantité d'au plus un atome d'iode et/ou de brome par chaîne polymère, et qui contiennent du brome à l'intérieur de la chaîne, provenant d'unités bromées de la chaîne polymère, dans une quantité de 0,05 à 2% en poids, sur la base du poids total des unités monomères présentes dans le polymère, lesdits copolymères pouvant être obtenus par polymérisation des monomères correspondants, en présence d'un ou plusieurs composés capables de fournir, dans des conditions de polymérisation, des ions I⁻ et/ou Br⁻ dans le milieu de polymérisation, et étant choisis parmi les acides iodhydrique (HI) et bromhydrique (HBr), les iodures et bromures de métaux appartenant aux Groupes I et II, A et B, aux Groupes III et IVa de la Classification Périodique et des métaux de transition.

2. Copolymères selon la revendication 1, dans lesquels les atomes d'iode et/ou de brome terminaux des chaînes polymères représentent de 0,001 à 1% en poids du poids total des unités monomères présentes dans le polymère.

3. Copolymères selon l'une des revendications 1 et 2, dans lesquels la teneur des atomes d'iode et/ou de brome terminaux est de 0,04 à 0,6% en poids du poids total des unités monomères présentes dans le polymère.

4. Copolymères selon l'une des revendications 1 à 3, comprenant jusqu'à 40% en moles, sur la base des moles totales d'unités monomères fluorées, d'unités provenant d'une oléfine choisie parmi l'éthylène, le propylène, le butène, l'isobutène ou leurs mélanges.

5. Procédé de préparation de copolymères fluorés élastomères tels que définis à la revendication 1, suivant lequel un mélange de monomères comprenant (a) du fluorure de vinylidène et/ou du tétrafluoroéthylène et, facultativement, de l'hexafluoropropène et/ou des perfluoroalkyl-perfluorovinyléthers et (b) au moins un monomère bromé polymérisable, est polymérisé au moyen d'amorceurs radicalaires et en présence d'un ou plusieurs composés capables de fournir, dans les conditions de polymérisation, des ions I⁻ et/ou Br⁻ dans le milieu de polymérisation et étant choisis parmi les acides iodhydrique (HI) et bromhydrique (HBr), les iodures et bromures de métaux appartenant aux Groupes I et II, A et B, aux Groupes III et IVa de la Classification Périodique et des métaux de transition, ledit (ou lesdits) monomère(s) bromé(s) étant employé(s) dans une quantité telle qu'ils fournissent un polymère contenant, à l'intérieur de la chaîne polymère, de 0,05 à 2% en poids de brome, sur la base du poids total des unités monomères présentes dans le polymère.

6. Procédé selon la revendication 5, qui est effectué en émulsion aqueuse.

7. Procédé selon l'une des revendications 5 et 6, dans lequel le mélange de monomères comprend jusqu'à 40% en moles, sur la base des moles totales de monomères fluorés présents dans celui-ci, d'une oléfine choisie parmi l'éthylène, le propylène, le butène-1, l'isobutène et leurs mélanges.

8. Procédé selon l'une des revendications 5 à 7, dans lequel des iodures ou bromures de métaux alcalins ou alcalino-terreux sont utilisés.

9. Procédé selon l'une des revendications 5 à 8, dans lequel des iodures de métaux alcalins et/ou de métaux alcalino-terreux sont employés.
